# EUROPEAN PATENT SPECIFICATION

(11) **EP 1 427 173 B1**
(45) Date of publication and mention of the grant of the patent: **20.09.2006**
(21) Application number: 03027784.2
(22) Date of filing: 03.12.2003
(51) Int. Cl.: H04M 1/02

(54) **Folder-type communication apparatus**
Klappbares Kommunikationsgerät
Appareil de communication pliable

(30) Priority: 03.12.2002 KR 2002076199
(43) Date of publication of application: 09.06.2004
(73) Proprietor: SAMSUNG ELECTRONICS CO., LTD., Suwon-City, Kyungki-do (KR)
(72) Inventor: Park, In-Gon, Suwon-city Kyungki-do (KR); Park, Seung-Min, Suwon-city Kyungki-do (KR); Lee, Ji-Young, Suwon-city Kyungki-do (KR); Kim, Sung-Kwon, Suwon-city Kyungki-do (KR); Hyun, Sang-Min, Suwon-city Kyungki-do (KR); Im, Jung-Hyeok, Suwon-city Kyungki-do (KR); Shigeri, Mitsuhiro, Suwon-city Kyungki-do (KR)
(74) Representative: Grünecker, Kinkeldey, Stockmair & Schwanhäusser Anwaltssozietät

(56) References cited:
- US-A- 5 552 967
- US-A1- 2001 016 508
- US-A1- 2003 119 562
- PATENT ABSTRACTS OF JAPAN vol. 018, no. 256 (P-1738), 16 May 1994 (1994-05-16) -& JP 06 035567 A (CANON INC), 10 February 1994 (1994-02-10)

## Description

The present invention relates generally to a portable communication apparatus such as a personal digital assistant (PDA), a hand held phone (HHP), a cellular phone, etc., and more particularly to a folder-type communication apparatus in which it is convenient to check data displayed on a display, wherein the data is frequently checked.

In general, a "portable communication apparatus" is an apparatus with which a user can wirelessly communicate with a counterpart. This portable communication apparatus is classified into various types based on its physical characteristics. For example, a wireless terminal is commonly classified into a bar-type, a flip-type, or a folder-type terminal. The bar-type wireless terminal has a single housing is constructed in a bar shape. The flip-type wireless terminal has a flip is pivotably connected to a single bar-shaped housing by a hinge device. The folder-type wireless terminal has a folder is pivotably coupled to a single bar-shaped housing by a hinge device, which enables the folder to be folded.

Further, the portable wireless terminal may be classified into a neck wearable type or a wrist wearable type according to a physical wearable position. The neck wearable type wireless terminal is a type in which a user wears it around the neck using a string, while the wrist wearable type wireless terminal is a type in which a user wears it around the wrist.

In addition, the wireless terminal may be classified into a rotation-type or a sliding-type terminal based on the manner in which it opens and closes. The rotation-type wireless terminal is a type of terminal in which two housings are coupled to each other in a manner in which one housing can rotate about the other to be opened and closed. The sliding-type wireless terminal is a type of terminal in which two housings are coupled to each other in a manner in which one housing can slide on the other to be opened and closed. The above-described wireless terminals are easily understood by those skilled in the art.

Of the conventional communication apparatuses classified based on their physical appearances, the folder-type communication apparatus will be illustrated herein. Typically, the known folder-type communication apparatus includes a main housing, a folder, and a hinge module connecting the folder to the main housing to be rotatable in a direction of moving towards or away from the main housing. The main housing has an upper surface including a plurality of keys and a microphone, and has a lower surface including a speaker device and a display. The construction of this known folder-type communication apparatus is easily understood by those skilled in the art.

However, the conventional folder-type communication apparatus has a problem in that, when the folder is closed on the main housing, there is a difficulty in checking data on the display when it is covered by the folder, especially in checking data, which needs to be checked frequently. This leads to another problem in that a user suffers a trouble to open the folder from the main housing to check the data. Here, the type of data which needs to be checked frequently can include an icon indicating a receivable sensitivity of an antenna, an icon indicating a remaining power quantity of an battery, an icon informing an arrival of a character message, a date, a time, etc.

US2001/016508 discloses a portable terminal device and a wireless communication terminal device. This device has a first casing that has a first liquid crystal display part and a second casing that has a keyboard. The first and the second casing are constructed in such a form as to be collapsible around a hinge portion. This hinge portion includes a circular-cylindrical third casing that is constructed so as to be movable independently of the first and second casings and as a second liquid crystal display. The user performs a rotation operation with his fingers. When having opened the lid portion, the user has to rotate a casing portion including the second display means manually, so that the contents of the second display may be visually recognizable. When having closed the lid portion, the user has to rotate the hinge portion, so that the second display may be visually recognizable.

PATENT ABSTRACTS OF JAPAN vol. 018, no. 256 (P-1738), 16 May 1994 & JP 06 035567 (CANON INC), 10 February 1994 discloses a device comprising two display devices. The main display device is contained by the lid and is hidden when the lid is closed. The auxiliary display device is positioned below this main display device and can be rotated around an axis by the user.

Both prior art documents relate to devices having two displays, where the second display is rotatable around an axis and has to be rotated manually by the user.

It is the object of the present invention to provide a portable communication apparatus capable of easily checking various data and icons which are frequently used regardless of the opening/closing of a second housing, and thereby more conveniently enabling use of the portable communication apparatus.

This object is solved by the subject matter of the independent claim.

Preferred embodiments are defined in the dependent claims.

In order to accomplish the above, there is provided a portable communication apparatus comprising: a first housing including an open space and a pair of hinge supports, the open space having at least one opening, the hinge supports extending longitudinally and surrounding opposite sides of the open space; a hinge axis extending across the open space; a second housing including upper and lower surfaces, rotatably connected to the first housing, the lower surface being provided with a first display; and a third housing including upper and lower surfaces, extending in a longitudinal direction of the second housing to be accommodated in the open space, enabling the third housing to rotate about the hinge axis, whereby the second display is always exposed regardless of an open and close state of the second housing.

The above features and advantages of the present invention will be more apparent from the following detailed description taken in conjunction with the accompanying drawings, in which:
FIG. 1 is a perspective view of a folder-type communication apparatus according to a preferred embodiment of the present invention, in which a second housing is closed;
FIG. 2 is a perspective view of a folder-type communication apparatus according to a preferred embodiment of the present invention, in which a second housing is opened;
FIG. 3 is a front view of the folder-type communication apparatus illustrated in FIG. 2;
FIG. 4 is a bottom view of the folder-type communication apparatus illustrated in FIG. 1;
FIG. 5 is a top view of the folder-type communication apparatus illustrated in FIG. 1; and
FIG. 6 is a side view of the folder-type communication apparatus illustrated in FIG. 1.

Preferred embodiments of the present invention will be described in detail herein below with reference to the accompanying drawings. In the following description of the present invention, a detailed description of known functions and configurations incorporated herein will be omitted when it may make the subject matter of the present invention rather unclear.

It will be noted that a portable communication apparatus according to the present invention is designed so that a second display is always exposed regardless of an open and close state of a second housing, and thus it is easy to check data displayed on the display.

In addition, it should be noted that the portable communication apparatus according to the present invention falls into the category of a folder-type communication apparatus. The typical construction of known folder-type communication apparatus will not be described, because it is easily understood and known by those skilled in the art.

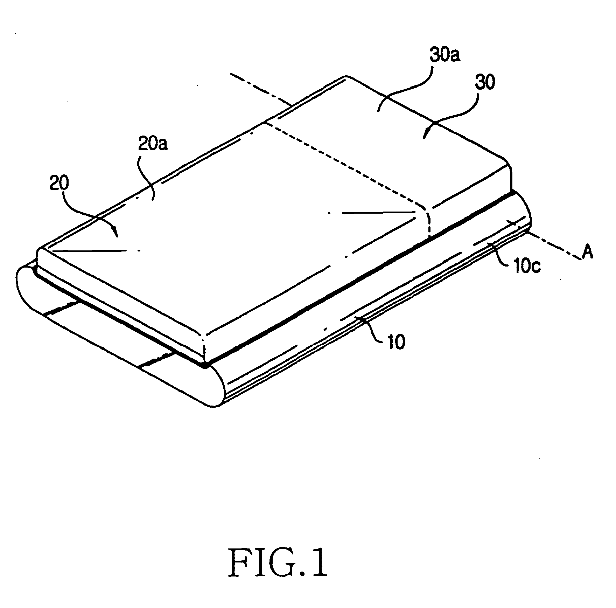

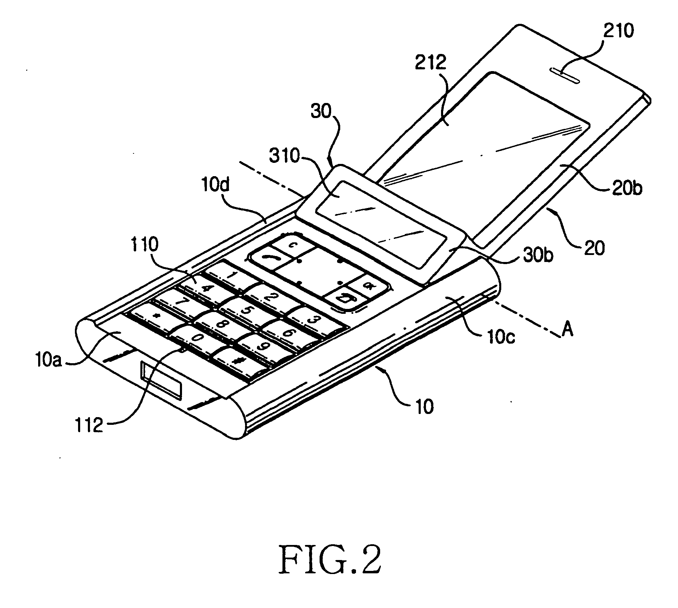

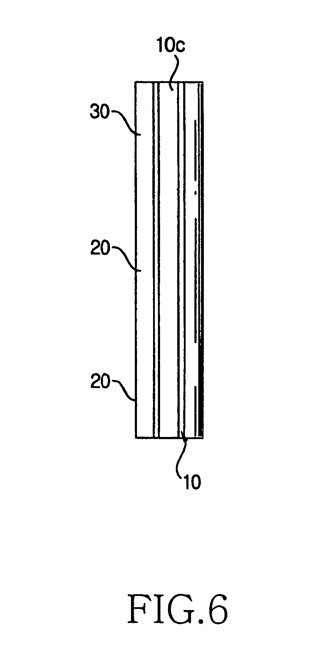

As illustrated in FIGs. 1 to 6, a portable communication apparatus according to a preferred embodiment of the present invention includes a first housing 10 formed with an open space 10e having at least one opening or opened end, a second housing 20 connected to the first housing 10 while being rotatable about a hinge axis A, rotating toward and away from the first housing 10, and a third housing 30 rotatably installed in the open space 10e.

The first housing 10 includes the open space 10e and also a pair of hinge supports 10c extending longitudinally and surrounding opposite sides of the open space 10e. The pair of hinge supports 10c is provided to connect the third housing 30, which will be described in more detail below, to the first housing 10. The first housing 10 has an upper surface 10a arranged with a plurality of keys 110 and a microphone 112.

The second housing 20 has a flat upper surface 20a and a lower surface 20b on which a first display 212 and a speaker device 210 are disposed. The first display 212 may be a typical LCD or a display capable of functioning as even a touch screen.

The third housing 30 has an upper surface 30a and a lower surface 30b, in which the upper surface 30a is flat, and the lower surface 30b is provided with a second display 310. The third housing 30 extends from the second housing 20 in a longitudinal direction. The third housing 30 is constructed in such a way that it can be accommodated in the open space 10e to rotate about the hinge axis A. That is, the hinge axis A extends across the open space 10e through the hinge supports 10c, and thus hinge axis A passes through the third housing 30, which is accommodated in the open space 10e in a transverse direction.

The third housing 30 is integrally formed by injection molding on one side of the second housing 20, so as to be protruded from the lower surface 20b of the second housing 20 in a stepped shape.

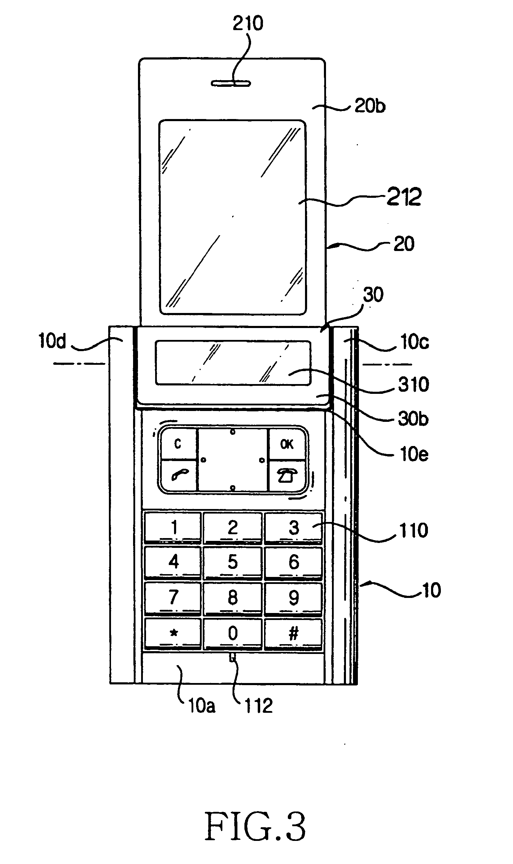

As illustrated in FIG. 3, when the second housing 20 is opened from the first housing 10, the first and second displays 212 and 310 face toward a user.

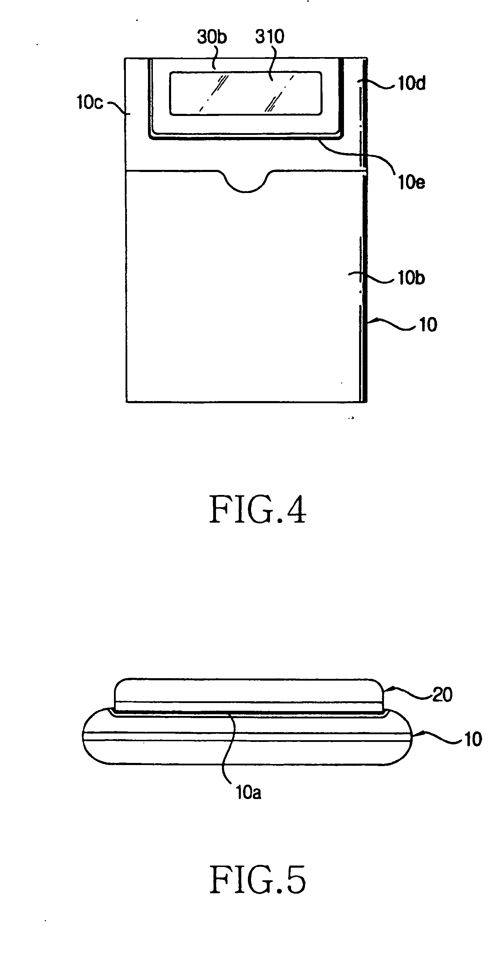

As illustrated in FIG. 4, when the second housing 20 is closed on the first housing 10, the second display 310 faces toward the lower surface 10b of the first housing 10. As a result, the second display 310 is exposed outside. Further, the first display 212 is not shown and at the same time the third housing 30 is completely accommodated in the opining space 10e.

In addition, it is preferred that various data is represented on the second display 310. Here, the various data can include a first icon for indicating a receivable sensitivity of an antenna, a second icon for indicating a remaining power quantity of an battery, a third icon for informing an arrival of a character message, a date, a time, etc. These types of data would be displayed on the second display 310 because a user can easily check the data without opening the second housing 20 even when the second housing 20 is closed on the first housing 10.

In addition, the second display 310 may be a typical LCD or a display capable of functioning as even a touch screen.

While the present invention has been shown and described with reference to certain preferred embodiments thereof, it will be understood by one skilled in the art that various modifications may be made therein without departing from the scope of the invention as defined by the appended claims.

As can seen from the foregoing, the portable communication apparatus according to the present invention is designed so that the second display is always exposed to the external environment regardless of the open and close state of the second housing. Therefore, is more convenient to use than the portable terminals in the prior art.

## Claims

1. A portable communication apparatus, comprising:
a first housing (10) including an open space (10e) and a pair of hinge supports (10c), the open space (10e) having at least one opening, the hinge supports (10c) extending longitudinally and surrounding opposite sides of the open space (10e);
a hinge axis (A) extending across the open space (10e);
a second housing (20) including a first display (212) rotatably connected to the first housing (10) to open from and close to the first housing (10); and
a second display (310);
**characterized in that**
the second display (310) is included in the second housing (20) or in a third housing (30), said third housing (30) extending in a longitudinal direction of the second housing (20) to be accommodated in the open space (10e) to enable the third housing (30) to rotate about the hinge axis (A);
wherein when the second display (310) is included in the third housing (30), the the third housing (30) is integrally connected to the second housing (20) to provide that the second housing (20) and the third housing (30) are moving simultaneously;
wherein said first display (212) and said second display (310) are faced towards a common direction in an open state; and
said second display (310) is always exposed regardless of an open and close state of the second housing (20) with respect to the first housing (10).

2. The portable communication apparatus according to claim 1 wherein the second display (310) is included in the second housing (20), wherein the first housing (10) has an upper surface (10a) including a plurality of keys (110) and a microphone (112), and wherein the second housing (20) has the lower surface (20b) including a speaker device (210).

3. The portable communication apparatus according to one of claims 1 or 2, wherein the second display (310) is included in the second housing (20), wherein the part of the lower surface (20b) of the second housing (20) including the second display (310) protrudes from the part of the lower surface (20b) of the second housing (20) including the first display (212) in a stepped shape.

4. The portable communication apparatus according to claim 1 wherein the second display (310) is included in the third housing (30), wherein the lower surface (30b) of the third housing (30) protrudes from the lower surface (20b) of the second housing (20) in a stepped shape.

## Patentansprüche

1. Eine tragbare Kommunikationsvorrichtung beinhaltend:
ein erstes Gehäuse (10), welches einen Freiraum (10e) und ein Paar von Gelenklagern (10c) beinhaltet, wobei der Freiraum (10e) mindestens eine Öffnung besitzt, die Gelenklager (10c) sich in Längsrichtung ausdehnen und gegenüberliegende Seiten des Freiraumes (10e) umgeben;
eine Gelenkachse (A), welche sich über den Freiraum (10e) ausdehnt;
ein zweites Gehäuse (20), welches eine erste Anzeige (212), welche drehbar mit dem ersten Gehäuse (10) verbunden ist, beinhaltet, welches sich beim Öffnen vom ersten Gehäuse (10) wegbewegt und sich beim Schließen auf das erste Gehäuse (10) zubewegt; und
eine zweite Anzeige (310);
**dadurch gekennzeichnet, dass**
die zweite Anzeige (310) in dem zweiten Gehäuse (20) oder in einem dritten Gehäuse (30) beinhaltet ist, besagtes drittes Gehäuse (30) dehnt sich in Längsrichtung des zweiten Gehäuses (20) aus, um in dem Freiraum (10e) angeordnet zu sein, um das dritte Gehäuse (30) zu befähigen, um die Gelenkachse (A) zu rotieren;
wobei, wenn die zweite Anzeige (31 0) in dem dritten Gehäuse (30) beinhaltet ist, ist das dritte Gehäuse (30) einhäusig mit dem zweiten Gehäuse (20) verbunden, um zu gewährleisten, dass das zweite Gehäuse (20) und das dritte Gehäuse (30) sich simultan bewegen;
wobei besagte erste Anzeige (212) und besagte zweite Anzeige (310) in einem geöffneten Zustand in eine gemeinsame Richtung ausgerichtet sind; und
besagte zweite Anzeige (310) immer exponiert ist, ungeachtet eines geöffneten oder geschlossenen Zustandes des zweiten Gehäuses (20) in Bezug auf das erste Gehäuse (10).

2. Die tragbare Kommunikationsvorrichtung gemäß Anspruch 1, wobei die zweite Anzeige (310) in dem zweiten Gehäuse (20) beinhaltet ist, wobei das erste Gehäuse (10) eine obere Oberfläche (10a) besitzt welche eine Vielzahl von Tasten (110) und ein Mikrofon (112) beinhaltet und wobei das zweite Gehäuse (20) eine untere Oberfläche (20b) besitzt welche einen Lautsprecher (210) beinhaltet.

3. Die tragbare Kommunikationsvorrichtung gemäß einem der Ansprüche 1 oder 2, wobei die zweite Anzeige (310) in dem zweiten Gehäuse (20) beinhaltet ist, wobei der Teil der unteren Oberfläche (20b) des zweiten Gehäuses (20) welcher die zweite Anzeige (310) beinhaltet über den Teil der unteren Oberfläche (20b) des zweiten Gehäuses (20), welches die erste Anzeige (212) beinhaltet in einer gestuften Form hervorragt.

4. Die tragbare Kommunikationsvorrichtung gemäß Anspruch 1, wobei die zweite Anzeige (310) in dem dritten Gehäuse (30) beinhaltet ist, wobei die untere Oberfläche (30b) des dritten Gehäuses (30) über die untere Oberfläche (20b) des zweiten Gehäuses (20) in einer gestuften Form hervorragt.

## Revendications

1. Appareil portatif de communication, comprenant :
un premier boîtier (10) incluant un espace ouvert (10e) et une paire de supports de charnière (10c), l'espace ouvert (10e) possédant au moins une ouverture, les supports de charnière (10c) s'étendant longitudinalement et surmontant des côtés opposés de l'espace ouvert (10e) ;
un axe de charnière (A) s'étendant au travers de l'espace ouvert (10e) ;
un deuxième boîtier (20) comprenant un premier écran d'affichage (212) qui est connecté en rotation au premier boîtier (10), afin de s'ouvrir en s'éloignant du premier boîtier (10) et de se fermer en s'en rapprochant ; et
un deuxième écran d'affichage (310) ;
**caractérisé en ce que**
le deuxième écran d'affichage (310) est inclus dans le deuxième boîtier (20) ou dans un troisième boîtier (30), ledit troisième boîtier (30) s'étendant dans une direction longitudinale du second boîtier (20) afin de se loger dans l'espace ouvert (10e), afin de permettre au troisième boîtier (30) de tourner autour de l'axe de charnière (A) ;
dans lequel, lorsque le deuxième écran d'affichage (310) est inclus dans le troisième boîtier (30), le troisième boîtier (30) est relié d'un seul tenant avec le deuxième boîtier (20) afin d'assurer que le deuxième boîtier (20) et le troisième boîtier (30) se déplacent simultanément ;
dans lequel ledit premier écran d'affichage (212) et ledit deuxième écran d'affichage (310) sont tournés dans une direction commune dans un état ouvert ; et
ledit second écran d'affichage (310) est toujours exposé, quel que soit l'état ouvert ou fermé du deuxième boîtier (20) par rapport au premier boîtier (10).

2. Appareil portatif de communication selon la revendication 1, dans lequel le deuxième écran d'affichage (310) est inclus dans le deuxième boîtier (20), dans lequel le premier boîtier (10) possède une surface supérieure (10a) comprenant une pluralité de touches (110) et un microphone (112) et dans lequel le deuxième boîtier (20) possède la surface inférieure (20b) comprenant un dispositif de haut-parleur (210).

3. Appareil portatif de communication selon l'une des revendications 1 et 2, dans lequel le deuxième écran d'affichage (310) est inclus dans le deuxième boîtier (20), dans lequel la partie de la surface inférieure (20b) du deuxième boîtier (20) comprenant le deuxième écran d'affichage (310) fait saillie par rapport à la partie de la surface inférieure (20b) du deuxième boîtier (20) comprenant le premier écran d'affichage (212), en formant un gradin.

4. Appareil portatif de communication selon la revendication 1, dans lequel le deuxième écran d'affichage (310) est compris dans le troisième boîtier (30), dans lequel la surface inférieure (30b) du troisième écran d'affichage (30) fait saillie par rapport à la partie de la surface inférieure (20b) du deuxième boîtier (20), en formant un gradin.
